# EUROPEAN PATENT SPECIFICATION

(11) **EP 4 124 979 B1**
(45) Date of publication and mention of the grant of the patent: **14.10.2026**
(21) Application number: 21382706.6
(22) Date of filing: 28.07.2021
(51) Int. Cl.: G06F 21/57, G06F 21/72

(54) **SOFTWARE UPDATE IN A SECURITY ELEMENT**
SOFTWARE-UPDATE IN EINEM SICHERHEITSELEMENT
MISE À JOUR DE LOGICIEL DANS UN ÉLÉMENT DE SÉCURITÉ

(43) Date of publication of application: 01.02.2023
(73) Proprietor: Giesecke+Devrient Mobile Security Germany GmbH, 81677 München (DE)
(72) Inventor: Ruau, Mariano, 08907 L'Hospitalet de Llobregat (ES); Gifre, Clara, 08028 Barcelona (ES); Garcia Farrés, Andreu, 08192 Sant Quirze del Vallès (ES); Gomez Soll, Pablo Daniel, 08019 Barcelona (ES)
(74) Representative: LKGLOBAL Partnerschaftsgesellschaft mbB

(56) References cited:
- US-B2- 10 069 633
- US-B2- 10 936 719

## Description

The present invention relates to updating a software installed in a secure element and in particular to updating a personalized trusted software, for example an operating system of the secure element.

### BACKGROUND OF THE INVENTION

Secure elements are widely used in a variety of systems such as mobile phones, smart cards, payment cards, access cards, to provide identification, authentication, data storage and application processing.

Where, for example, the smart card contains security-critical applications and sensitive data, such as in the case of payment cards and the like, a secure element is used to store the data. A secure element is a tamper resistant element, TRE, that provides a secure memory and an execution environment in which application code and application data can be securely stored and administered. The secure element ensures that access to the data stored on the card is provided only when authorized. Such a secure element may exist in any form factor such as UICC, embedded SE, smartSD, smart microSD, eSIM, etc.

A secure element may include, for example within a security domain, a collection of data, such as a firmware / an operating system, packages, applets, applications, including specific data required to operate the same, such as personalization data or the like, which are authenticated using security keys. The operating system and applications are stored within the secure element in volatile and non-volatile memory modules, and are executed in a secured processor of the secure element.

The specification Global Platform Card Technology Open Firmware Loader for Tamper resistant Elements v1.3 describes standardized mechanisms for loading firmware (that is, use case dependent data which may contain the operating system and application data) and personalization data into a secure element. In particular, an Image Trusted Loader, ITL, or update agent, provided inside the secure element is configured to receive an operation system image, to perform security checks - particularly authentication and integrity checks - on the image, and to trigger installation of the image contents into a memory of the secure element using specific data required to operate the image, so as to install in the secure element an operable operating system.

US 10 936 719 B2 discloses a system for preserving trust data during operating system updates of a secure element comprising the steps of using an updating SE operating system to uninstall the previous software and export OS trust data from the previous software and then to install the update to the main SE operating system and personalize it with the exported OS trust data. US 10 069 633 B2 discloses a secure programming system configured to receive a job control package having a security kernel and a target payload of content for programming into a pre-defined set of trusted devices.

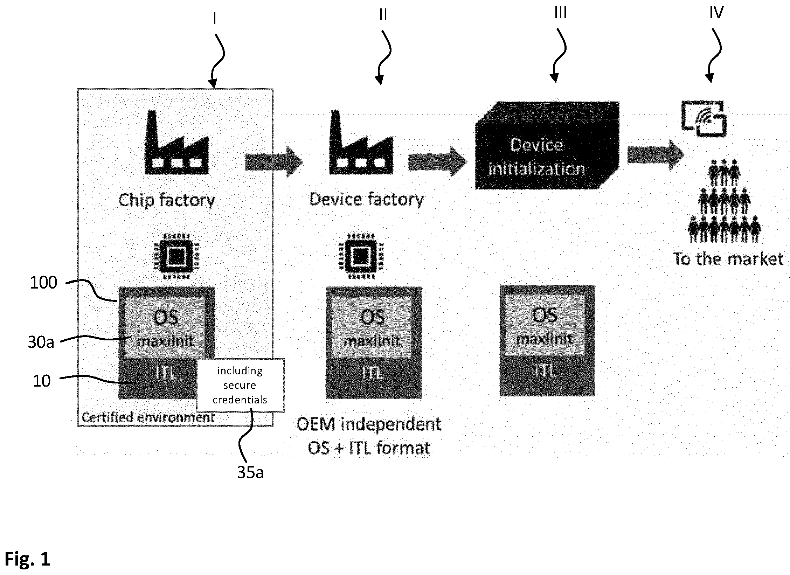

Fig. 1 shows a schematic representation of the conventional process of loading firmware (e.g., an operating system, OS) into a secure element. The upper row shows the entities responsible for the corresponding production phase (I, II, III, IV), while the lower row shows the content of the secure element (i.e., chip) in that particular production phase. During a first production phase I at a chip production site (i.e., the chip factory), the chip manufacturer provides for a secure element 100 to be loaded with trusted software, such as a secure operating system. At the chip production site, the trusted software is personalized with credentials 65a, which are specific data including keys or certificates and which, upon personalization, are stored in a personalized software image, e.g. a personalized operating system, OS, 30a referred to as "maxiInit" in Fig. 1. The trusted software or OS is personalized by specific commands, so called APDUs, that are send from an external personalization device at the chip production site to the secure element. The personalized software is finally loaded inside the chip.

The chip with its personalized software is then, at a device manufacturer's site, embedded in a portable card-like device, such as an (e)UICC or (e)SIM (phase II), or can be delivered to another device manufacturer's site to be included (phase III) in an electronic end device like a smart phone, a computer, a car, a measurement equipment, etc., and finally released to the market (phase IV). Note that if, at any stage of a chip's life cycle, a personalized trusted software needs to be amended or updated, the personalization data used to personalize the installed software to be amended or updated will be lost while, nevertheless, the amended or updated version, the respective software image, must be personalized.

Accordingly, there remains a need to enable updating a trusted software installed in a secure element which overcomes the above-mentioned drawbacks.

### SUMMARY OF THE INVENTION

The present invention addresses the above object by the subject-matter covered by the independent claims. Preferred embodiments of the invention are defined in the dependent claims.

According to a first aspect of the present invention, there is provided a method for updating an installed software, in particular an operating system, OS, in a secure element, SE. The method comprises in a first step providing an update agent in the SE. In a further step, specific data required for operating the installed software, in particular the operating system, on the SE is secured in a specific memory of the update agent. Further, a software image is loaded into the SE that represents an update of and is meant to replace the installed software, in particular the operating system. In a final step, the software image is made operable by the secured specific data and replaces the installed software, in particular the operating system, as an update thereof. The installed software is stored together with the specific data in a memory area of the SE and the specific data is secured by copying the specific data from the memory area of the SE to the memory of the update agent. The memory of the update agent is a dedicated and secured segment of non-volatile memory to which the update agent has exclusive access to. Securing the specific data is performed only during a factory production phase of the SE.

Throughout this application the term "software" refers to any trusted software to be loaded and executed in the secure element. Examples of such software include firmware, an operating system (OS), and any other use-case dependent secure applications. The expression "software image" (or "OS image") refers to a generic data format encapsulating a software version and cryptographic data to be used by the operating system or an agent of the SE, such as the update agent according to the present invention.

Preferably, the specific data is not an integral part of the installed software or the software image but nevertheless is required for operating the installed software (and the software image once it is installed) and/or for installing the software image onto the secure element so that it can be executed. That is, without the specific data, the software image cannot be operated and/or installed as an update of the installed software and replace and/or update it.

The essence of the present invention is that by the update agent specific data associated with an installed software is reused or 'recycled' for rendering the software image operable without having to generate or securely obtain or handle a new set of specific data from an external entity within a certified environment. Because the update agent itself is a trusted, certified software, it can be seen as functional replacement of the certified environment at the chip manufacturer's site, because it enables to securely reuse or 'recycle' the specific data of the installed software when it is updated. By this, the specific data is kept within the secure element's secure environment and under the control of a trusted entity, namely the update agent, and cannot be tampered with, thus ensuring the integrity of the software image.

Within the context of the present invention, the notion of making the software image operable by the secured specific data includes any process that utilizes the specific data to the effect that the software image is not operable without the specific data. Making the software image operable thus means that the software image is correctly and operably installed on the secure element by using the specific data. That is, the presence of the specific data at a particular point of the process of installing the software image is a requirement for its proper functioning as an update of the installed software. This may involve the requirement to use the specific data upon installation of the software image or, preferably, the requirement to use the specific data upon personalization of the software image.

Therefore, preferably, the specific data comprises or consists of personalization data, particularly secure credentials and/or cryptographic keys, that are required to personalize the software image. Within that context, the present invention overcomes the conventional requirement to personalize a software image within a certified environment, thus widening the options to update a software installed on the secure element. In other words, the present invention allows for updating an installed software, particularly a trusted operating system of a secure element, outside of the chip manufacturer's site and independent of any certified environment in a secure fashion. Because the update agent provides the required level of security that conventionally the chip manufacturer's certified environment provides, reusing or 'recycling' personalization data of the installed software to be replaced is enabled.

The proposed method provides an efficient and secure solution for updating a trusted software independently of the conventional security concept. As a trusted software image that updates an installed software does not need to be personalized in the same way the installed software was personalized in the first place, a flexible solution for personalizing a software update at any time during the lifecycle of a secure element is provided. The suggested way of updating an installed software by an appropriate software image ensures that strictly confidential personalization data remain under strict safety conditions within the update agent and are thus protected from unauthorized modifications.

The specific or sensitive data and/or personalization data is stored in a specific memory or memory structure of the update agent, which is a dedicated and secured segment of the non-volatile memory to which the update agent has exclusive access to.

In some embodiments of the present invention, the installed software has been personalized with the personalization data comprised in the specific data and the installed software is stored together with the specific data and/or personalization data in a memory area of the SE, where installed and/or executable software is stored, such as a non-volatile memory of the secure element.

The update agent secures the specific data and/or personalization data stored together with the installed software by copying or duplicating the specific data and/or personalization data to the specific memory of the update agent for later use. The specific data and/or personalization data is saved from deletion or degradation during the update process, e.g. by deleting the installed software together with its respective specific data and/or personalization data. Once the specific data and/or personalization data is secured in and/or copied to the specific memory of the update agent, the installed software can be updated, because it is only then possible to make a software image operable that represents an update of the installed software. Finally, the installed software is updated by personalizing the software image using the personalization data and/or by making the software image operable using the specific data stored in the specific memory of the update agent.

In some embodiments of the present invention, prior to installing, including making operable and/or personalizing the software image, the installed software is cancelled altogether, that is together with the specific data and/or personalization data that was used to make it operable. This includes cancelling any memory or memory area of the secure element in which the installed software or parts of it reside. For instance, in cases where the installed software to be updated is the operating system of the secure element, cancelling the complete operating system includes also cancelling all personalization data, OS-specific data, certificates, cryptographic keys, credentials and the like.

Once the software image, or the operating system image, is loaded onto the secure element for providing an update of the cancelled software, the specific data and/or personalization data secured in and by the update agent is required to make the loaded software image operable and/or to personalize it.

Because initially, an installed software, such as a trusted operating system of the SE, is made operable by specific data or personalized by personalization data during a first production phase of the SE, that specific data and/or personalization data is secured by the update agent during this initial production phase at a chip manufacturer's site. Therefore, the update agent, which itself is a trusted software, is loaded onto the SE and made operable / personalized by its specific data /personalization data also during the first production phase of the SE within the chip manufacturer's certified environment. This allows for securing specific data / personalization data of an installed software, such as a trusted operating system, by the update agent already at this early production phase.

According to some embodiments of the present invention, the update agent secures specific data and/or personalization data of a particular subset of the SE's installed software in its specific memory if and when the specific data and/or personalization data is altered or adapted during the installation process. This subset of the SE's installed software may comprise the SE's operating system only, it may also comprise any software or application installed on the SE that may potentially be updated during the SE's life cycle.

After securing specific data and/or personalization data by the update agent during the initial production phase I of the SE, the software image is preferably loaded into the SE in a later phase following the initial production phase of the SE. This increases the flexibility and versatility of secure elements and their applications within electronic devices, while still providing the required security level for personalizing the software, because such software images may then be made operable and/or personalized outside a certified environment of the chip manufacturer.

Preferably, in order to ensure that the specific data and/or personalization data is secured in a trusted state, the securing of specific data and/or personalization data is stopped when the secure element proceeds from the initial production phase to a subsequent phase of the manufacturing process. This ensures that upon an update of an installed software the respective specific data and/or personalization data have not been tampered with.

According to a second aspect of the present invention, there is provided a secure element comprising an installed software, in particular an operating system, and an update agent. The update agent comprises or has access to a specific memory or memory structure in which specific data required for operating the installed software can be or is secured.

In the moment when the secure element leaves the chip factory, the specific data required for operating the installed software has been secured for later update processes by the update agent.

At a phase subsequent to the chip production phase (referred to in Fig. 1 as phases II, III, or IV), the software image is at some point loaded onto the secure element in order to update the installed software therewith. The update agent is configured to complete the update of the installed software by making the loaded software image operable using the secured specific data.

Preferably, the specific data secured in the update agent's memory structure comprises personalization data of the installed software, particularly secure credentials and/or cryptographic keys by which the installed software has been personalized. That is, the specific or personalization data secured by and in the update agent is a duplicate of or at least comprises the personalization data used to personalize the installed software. Within this context the update agent is configured to update the installed software in that the loaded software image is personalized using the secured personalization data.

In some embodiments, the secure element includes a processor, and memory coupled to the processor, which stores a program module executed by the processor. The program module may include instructions for at least some of the aforementioned operations performed by the secure element, for instance that of the update agent according to the present invention.

According to a third aspect of the present invention, there is provided an update agent for use in a secure element. As already detailed in connection to the first and second aspect, the update agent comprises a memory and is configured to secure specific data required for operating a software installed on the secure element and to make an uploaded software image operable by the secured specific data that represents an update of the installed software. The update agent is preferably designed as a software that can be installed onto and executed by a secure element according to the present invention in order to enable update of a software installed on the secure element.

In some embodiments of the present invention according to any of the forementioned aspects, the update agent is configured upon loading the software image, to perform authentication of the software image using the authentication data stored in a memory of the update agent. Preferably, the secure element, particularly the update agent, authenticates the software image by verifying a digital signature, which may be associated with a vendor of the secure element or with a provider of an electronic device the secure element is embedded on. For instance, the update agent may use an encryption key associated with a particular vendor or device to verify the integrity of the software image. The update agent may also decrypt the software image using authentication data stored in a memory of the update agent, once the software image is loaded onto the secure element.

The update agent is thus a stand-alone entity which is loaded in the factory onto the secure element, and which allows an operating system and/or other trusted software image to be loaded on top of it at any time, even when the secure element, respectively a device the secure element is embedded on, is already deployed in the field. Thus, the update agent allows to directly load a software image or an operating system in the field, that is, outside a certified environment, in order to update a software installed on the secure element.

According to yet a further aspect of the present invention, there is provided a computer-program for use in conjunction with a secure element according to the second aspect in an electronic device in which the secure element is or can be embedded. The computer-program product comprises a non-transitory computer-readable storage medium and a computer-program mechanism embedded therein, to load a software image into the secure element in the electronic device. The computer-program mechanism includes instructions for securing specific data required for operating a software installed on the secure element in a memory, the specific data comprising personalization data the installed software has been personalized with; instructions for receiving a software image to be loaded onto the secure element, the software image representing an update of the installed software; and instructions for making the software image operable by the secured specific data and/or personalizing the software image by the personalization data comprised in the specific data.

It has to be noted that all the devices, elements, units and means described in the present application could be implemented in software or hardware elements or combination thereof. All steps which are performed by the various entities described in the present application as well as the described functionalities are intended to mean that the respective entity is adapted to or configured to perform the respective steps and functionalities.

Further aspects, features and advantages of the present invention will become apparent to those of ordinary skills in the art upon reviewing the following detailed description of preferred embodiments and variants of the present invention in conjunction with the accompanying figures.

### BRIEF DESCRIPTION OF THE DRAWINGS

Reference will now be made to the accompanying figures, in which:
- FIG. 1: shows a schematic representation of the conventional production flow of a secure element;
- FIG. 2a: shows the structure of a secure element according to a first preferred embodiment of the present invention according to which an installed software is updated;
- FIG. 2b: shows the structure of a secure element according to a second preferred embodiment of the present invention according to which an operating system is updated;
- FIG. 3: shows a flow diagram illustrating a method according to the present invention.

### DETAILED DESCRIPTION

Detailed explanations of the present invention are given below with reference to attached drawings that illustrate specific embodiment examples of the present invention. These embodiments are described in sufficient detail to enable those skilled in the art to practice the invention. It is to be understood that the various embodiments of the present invention, although different, are not necessarily mutually exclusive. For example, a particular feature, structure, or characteristic described herein in connection with one embodiment may be implemented within other embodiments without departing from the scope of the present invention. In addition, it is to be understood that the position or arrangement of individual elements within each disclosed embodiment may be modified without departing from the scope of the present invention. The following detailed description is, therefore, not to be taken in a limiting sense, and the scope of the present invention is defined only by the appended claims. In the drawings, like numerals refer to the same or similar functionality throughout the several views.

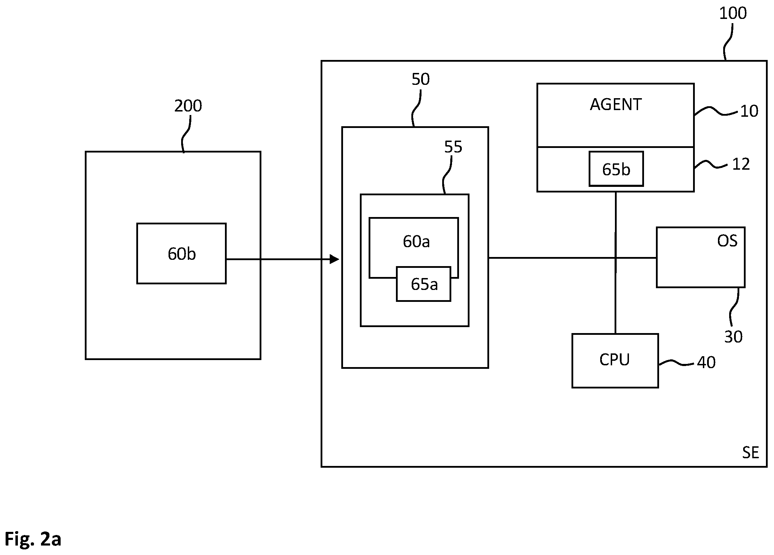

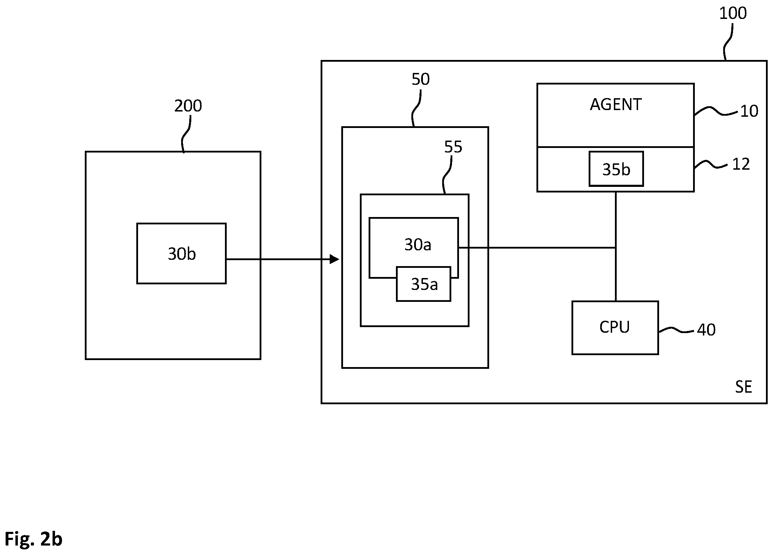

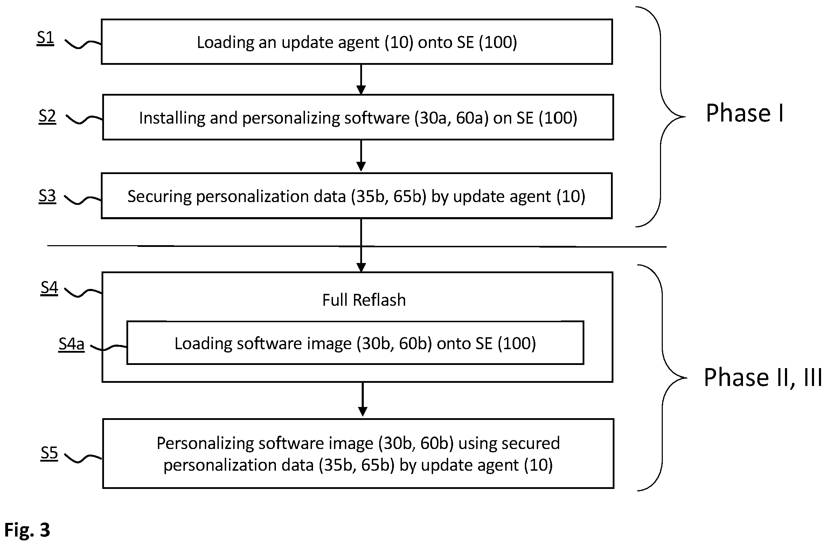

Figs. 2a and 2b show the structure of the secure element, SE, 100 according to two preferred embodiments in greater detail. Fig. 3 shows the steps of the method according to the invention in connection to Figs. 2a and 2b.

The SE 100 shown in Figs. 2a is a tamper resistant element, containing an update agent 10, an operating system, OS, 30 and a processor, CPU, 40. Both the update agent 10 and the OS 30 may be stored in a memory of the SE 100, such as the non-volatile memory 50. The OS 30 and the update agent 10 are independent entities that can communicate with each other over an appropriate interface, for instance over an Application Programming Interface, API. Memory 50 is a non-volatile memory of the SE 100 that comprises a memory area 55 in which software is stored, which is installed on the SE 100 and executable by the CPU 40. Such installed software may be an executable application or program, identified by reference numeral 60a in Fig. 2a, that provides a certain functionality to the secure element, or may even be the operating system of the secure element 100, identified by reference numeral 30a in Fig. 2b, which, in the present context also is an installed software that may be required to be updated at a certain point of the life cycle of the SE 100. Both the OS 35a of Fig. 2b and the OS 30 of Fig. 2a are standard operating systems of secure elements or smart cards, for example based on the Java Card platform. They are equivalent and the difference between Fig. 2a and 2b is that the OS 30 of Fig 2a is in Fig. 2b subject to a software update according to the present invention. The personalized OS 30a of Fig. 2a is identified in Fig. 1 as "maxInit".

The update agent 10 may be a functional part of or realized as a functionality of the operating system 30 or a loader entity allowing the provisioning of software (such as, for instance, use case dependent firmware) within the SE 100. Such loader entities are also referred to as Image Trusted Loader, ITL, in the art. Update agents are the main entities in charge of loading software or software images into the secure element as well as any other procedure related to it, such as update, restore, rollback or the like. In Figs. 2a and 2b software images to be loaded onto the SE 100 are referred to by reference numerals 60b, identifying an arbitrary software image, and 30b, identifying an operating system image, respectively. The update agent 10, regardless of whether it is realized as an independent entity or as functional part of the operating system 30, is also loaded onto the SE 100 during factory production (see step S1 of Fig. 3), because it reflects a security critical entity of the SE 100 (Fig. 1, phase I).

The update agent 10 may contain its own reserved memory space in form of a memory structure 12, to store sensible data thereon, for instance personalization data and/or authentication data, the latter being used to authenticate and/or decrypt a software image 30b, 60b before it is personalized. At some point of the personalization process, the memory structure 12 of the update agent 10 may therefore contain personalization data 35b, 65b and the operating system 30 may have access to at least part of the memory structure 12.

According to Fig. 2a, an executable software 60a is installed on the SE 100 in a personalized way. The installed software 60a therefore has personalization data 65a associated therewith, for instance secure credentials and/or cryptographic keys, that ensure that the installed software is an authenticated, trusted and untampered software. The installed software 60a and the personalization data 65a are stored together in the memory area 55 of the SE 100. Within the memory area 55, the installed software 60a and the respective personalization data 65a may be stored in an intertwined fashion, because upon installation the software 60a is equipped or enriched with personalization data 65a in various ways. The software 60a may have been personalized and installed on the SE 100 during factory production of the SE 100 (see step S2 of Fig. 3), because personalization is a security-critical operation that conventionally is performed within a certified environment of a production site of the manufacturer of the SE 100.

Fig. 2b differs over Fig. 2a in that it relates to the case where the installed software is in fact the operating system 30a of the SE 100 itself, having attached therewith individual personalization data 35a. For the reasons outlines above, the operating system 30a is personalized and installed on the SE 100 during factory production of the SE 100 (see step S2 of Fig. 3).

The SE 100 in the state as illustrated in Fig. 2a and 2b has completed the initial chip production (Fig. 1, phase I) and has left the chip manufacturer's certified environment. In this situation, a copy 65b, 35b of the personalization data 65a, 35a has been secured in the memory structure 12 of the update agent 10 and a software image 60b, 30b is provided by an external server 200 to be loaded onto the secure element 100 in order to update and replace the installed software 60a, 30a. The software image 60b, 30b represents a software update of the installed software 60a or operating system 30a, respectively. The external server 200 may represent an entity which communicates with the SE 100. It can be a LPA (Local Profile Assistant), a terminal, or whatever device it is that the SE may be in connection with. Particularly, the external server 200 is or comprises an image delivery server and provides during a subsequent production phase (Fig. 1, phases II, III, IV) the software image 60b or operating system image 30b to the SE through a customized interface.

Fig. 3 shows a flow chart of the main steps of a method for updating an installed software 60a (see Fig. 2a), for instance an operating system, OS, 30a (see Fig. 2b), in a secure element 100. The steps of the method are described in detail with reference to the SE illustrated in Fig. 2a and Fig. 2b.

The method according to the present invention, as described in the following, is not restricted to any particular type of software or software image. In fact, any secure software or software image that can be installed on and executed by a secure element 100 can be subject to the update method as disclosed herein, for example a firmware or OS of the SE 100 or an applet/application.

Steps S1 to S3 are performed within a certified environment during the factory production phase of the SE 100 to ensure security and authenticity of its software components and data. Steps S4 and S5 represent the software update process that can be performed outside the certified environment of the chip manufacturer, in a subsequent phase II, or III, or even later ( see Fig. 1)

With reference to Fig. 3, in a first step S1 performed in the initial chip production phase I, the update agent 10 is loaded onto the SE 100. The update agent 10 reflects a security critical entity of the SE 100 that is loaded onto the SE 100 during factory production.

In a second step S2, software is installed on the SE 100, for example application of other software 60a or the operating system 30a of the SE 100. Upon installing the software 60a or operating system 30a, it is personalized by means of respective personalization data 65a, 35b, respectively. This includes loading both personalization data 65a, 35a, particularly including secure credentials and cryptographic keys, and the software 60a or operating system 30a to be installed into the SE 100. By using the credentials and keys 65a, 35a, the loaded software 60a or operating system 60a is finally personalized to render an executable software 60a, 65a or an executable operating system 30a, 35a installed on the SE 100, the latter referred to as "maxInit" in Fig. 1.

The update agent 10 may facilitate or even conduct step S2 in that it loads personalization data 65a, 35a into the memory structure 12 and personalizes the software 60a or operating system 30a using loaded personalization data 65a, 35a. In effect, the installed software contains the operative software 60a plus its specific personalization/ configuration 65a, including credentials.

Likewise, within the context of Fig. 2b, the operating system contains the operative system 30a plus its specific personalization/ configuration 35a.

Steps S1 and S2 can be performed sequentially, that is, by means of two or more load commands (e.g., APDU commands), or in one step, in which the update agent 10 is loaded together with the software 60a / operating system 30a and/or personalization data 65a, 35a onto the secure element 100.

For enabling an update of the installed software 60a or operating system 30a outside of the chip manufacturer's certified environment according to the present invention, the update agent 30 secures in step S3 specific, sensitive data of the installed software 60a or the operating system 30a, for example personalization data 65a, 35a, in the memory structure 12. Within the context of software 60a, 30a installed on a secure element 100, such secured specific data 65b, 35b is characterized in that it is not an integral part of the installed software 60a or operating system 30a itself but is loaded separately and is required to operate the installed software 60a or operating system 60a. Within the context of the present invention, the secured specific data 65b, 35b is also required to render operable or operate any software image 60b or operating system image 30b that is loaded onto the SE 100 as an update of the installed software 60a or operating system 60a to replace the same. Particularly, personalization data 65a, 35a are specific data in the above sense and are secured by the update agent 10in step S3 as duplicated personalization data 65b, 35b.

The step S3 of securing specific and/or personalization data 65b, 35b may be a continuous process within chip production phase I in the course of which specific and/or personalization data 65b, 35b is secured each time the specific and/or personalization data 65a, 35a is amended during installation of software 60a or operating system 30a.

Personalization data 65b, 35b and other sensitive data specific to and required for operating the secure element 100 and/or a particular installed software 60a, such as the operating system 30a, is secured by the update agent 10 in step S3, because upon certain types of later updates such data may get lost, for example when particular data regions are updated or particular portions of the memory area 55 are overwritten.

To enable an update of installed software 60a, such as an operating system 30a, without losing the personalization and thus operability of the software 60a, 30a to be updated outside of the chip manufacturer's certified environment, such specific data 65b, 35b is secured in and by the update agent 10 in order to later retrieve it for updating and installing a software image 60b or operating system image 30b and rendering it operable.

According to the present invention, step S3 is performed only during the production phase of the secure element 100, that is while the secure element 100 is still within the chip manufacturer's certified environment. When the secure element 100 proceeds to a subsequent production phase II, III, or IV according to Fig. 1, secured data 35b, 65b are preserved in the state it is when the SE 100 leaves production phase I. Therefore the update agent 10 stops securing specific and/or personalization data 65b, 35b at this point of the production cycle.

Steps S4 and S5 illustrate the actual update of an installed software 60a or the installed operating system 30a by a software image 60b or an operating system image 30b in a subsequent production phase II, or III, or later (see Fig. 1).

As a part of step S4, the software image 60b or operating system image 30b is loaded from an external image server 200 into the memory area 55 of the SE 100 (step S4a). Either before the image upload or intrinsically in the course of the image upload the installed software 60a or the installed operating system 30a is completely deleted from memory area 55 together with all related or associated specific and personalization data 65a, 35a, respectively. This deletion is sometimes referred to as "Full Reflash" and is required upon software update, because ROM updates are not possible. Upon Full Reflash the memory area 55 is deleted, that is the complete installed software 60a or complete installed operating system 30a is deleted together with its personalization data 65a, 35a, such as private credentials and cryptographic keys, and any specific data required to operate the installed software 60a or operating system 30a.

In step S4a the update agent 10 loads the updated software version or operating system version into memory area 55 in the form of the software image 60b or operating system image 30b provided by the image server 200. Due to the Full Reflash, no specific or personalization data 65a, 35a is available once the software image 60b or operating system image 30b is loaded into memory area 55 of the SE 100. At this point the secure element 1000 would conventionally be rendered useless, because any software image 60b or operating system image 30b would need to be personalized, which conventionally is not possible outside the certified environment of production phase I.

In step S5, the update agent 10 personalizes the loaded software image 60b or operating system image 30b by specific and personalization data 65b, 35b previously secured in the memory structure 12 during step S3. Since the specific and personalization data 65b, 35b represents a duplicate of specific and personalization data 65a, 35a that has been deleted in the course of the Full Reflash in step S4, the update agent 10 recovers the secured specific and personalization data 65b, 35b in step S5. As an effect of the data recovery, the recovery the uploaded software image 60b or operating system image 30b is rendered operable by the secured specific and personalization data 65b, 35b, for example in that the uploaded software image 60b or operating system image 30b is personalized using personalization data 65b, 35b. Therefore, in step S5, the update agent 10 transforms the loaded software image 60b or operating system image 30b so that is becomes the new, updated and operable software or operating system installed on the SE 100.

At the end of this process, the software image 60a or operating system image 30a has been personalized by personalization data 65b, 35b, respectively. In case of updating the operating system 30a by an operating system image 30b, the personalized operating system image is referred to in Fig. 1 as "maxiInit". This means that it contains the operative system plus its specific personalization/ configuration, including credentials.

As this update process can be repeated multiple times during the life cycle of the SE 100, each time an installed software 60a or the installed operating system 30a is updated, the update agent 10 performs a Full Reflash followed by a recovery of the specific and personalization data 65b, 35b secured during chip production phase I of the SE 100. By this process, a software image 60b or operating system image 30b uploaded onto the SE 100 in a phase subsequent to the chip production phase I can nevertheless be rendered operable or personalized equally secure, as if it was personalized in the conventional way during production phase I of the secure element 100.

The methods and apparatus as described through the embodiments above, provides an efficient and secure solution for personalizing a trusted software image outside of the certified environment of a chip manufacturer's site. As the software image can be personalized at a later phase and outside the chip manufacturer's environment, a flexible solution for personalizing software at any time during the lifecycle of a secure element is provided.

In the foregoing specification, the invention has been described with reference to specific embodiments thereof. It will, however, be evident that various modifications and changes may be made thereto without departing from the broader scope of the invention. For example, the above-described process flows are described with reference to a particular ordering of process actions. However, the ordering of many of the described process actions may be changed without affecting the scope or operation of the invention. The specification and drawings are, accordingly, to be regarded in an illustrative rather than restrictive sense.

## Claims

1. A method for updating an installed software (60a), in particular an operating system, OS, (30a) in a secure element, SE (100), the method comprising:
- providing (S1) an update agent (10) in the SE (100);
- securing (S3) specific data (35a; 65a) required for operating the installed software (30a; 60a) in a memory (12) of the update agent (10);
- loading (S4a) a software image (30b; 60b) into the SE (100), the software image (30b; 60b) representing an update of the installed software (30a; 60a);
- making (S5) the software image (30b; 60b) operable by the secured specific data (35b; 65b),
wherein the installed software (30a; 60a) is stored together with the specific data (35a; 65a) in a memory area (55) of the SE (100) and the specific data (35a; 65a) is secured (S3) by copying the specific data (35b; 65b) from the memory area (55) of the SE (100) to the memory (12) of the update agent (10), wherein the memory (12) of the update agent (10) is a dedicated and secured segment of non-volatile memory to which the update agent (10) has exclusive access to,
wherein securing (3) the specific data (35,a, 65a) is performed only during a factory production phase of the SE (100).

2. The method according to claim 1, wherein, in the step of securing (S3), specific data (35a; 65a) which comprises personalization data of the installed software (30a; 60a) is secured, particularly secure credentials and/or cryptographic keys.

3. The method according to claim 2, wherein the installed software (30a; 60a) has been personalized with the personalization data (35a; 65a) and the installed software (30a; 60a) is updated (S4, S5) in that the software image (30b; 60b) is made operable (S5) by personalizing the software image (30b; 60b) using the personalization data (35b; 65b).

4. The method according to claim 1, wherein the installed software (60a; 30a) is deleted (S4) together with the specific data (35a; 65a) by deleting the memory area (55) of the SE (100) prior to loading (S4a) the software image (30b; 60b) or as a result of loading (S4a) the software image (30b; 60b) into the memory area (55).

5. The method according to any one of the preceding claims, wherein the specific data (35a; 65a) is secured (S3) during a production phase (I) of the SE (100) and the software image (30b; 60b) is loaded (S4a) and made operable (S5) in a subsequent phase (II, III, IV) after the production phase (I) of the SE (100).

6. The method according to any one of the preceding claims, wherein the specific data (35a; 65a) is secured (S3) by the update agent (10) if and when the specific data (35a; 65a) is altered during a production phase (I) of the SE (100), wherein the update agent (10) stops securing the specific data (35a; 65a) if and when the SE (100) proceeds to a subsequent phase (II, III, IV) after the production phase (I) of the SE (100).

7. The method according to any one of the preceding claims, wherein the update agent (10) is provided by loading (S1) the update agent (10) into the SE (100) during a production phase (I) of the SE (100).

8. A secure element (100), comprising an installed software (60a), in particular an operating system (30a) and an update agent, the update agent (10) comprising a memory (12) in which specific data (35b; 65b) required for operating the installed software (30a; 60a) is secured and being configured to make a software image (30b; 60b) operable by the secured specific data (65b; 35b), the software image (30b; 60b) being loaded onto the secure element (100) and representing an update of the installed software (30a; 60a),
wherein the specific data (35b; 65b) secured in the memory (12) of the update agent (10) is a copy of specific data (35a; 65a) stored in a memory area (55) of the secure element (100) together with the installed software (30a; 60a),
wherein the memory (12) of the update agent (10) is a dedicated and secured segment of non-volatile memory to which the update agent (10) has exclusive access to,
wherein securing (3) the specific data (35,a, 65a) is performed only during a factory production phase of the SE (100).

9. The secure element (100) according to claim 8, wherein the secured specific data (35b; 65b) comprises personalization data of the installed software (30a; 60a), particularly secure credentials and/or cryptographic keys, and the installed software (30a; 60a) has been personalized with the personalization data (35a; 65a), whereas the update agent (10) is configured to update the installed software (30a; 60a) in that the loaded software image (30b; 60b) is made operable by personalizing it using the secured personalization data (35b; 65b).

10. An update agent (10) for use in a secure element (100), the update agent (10) comprising a memory (12) and being configured
- to secure specific data (35a; 65a) required for operating a software (30a; 60a) installed on the secure element (100) in a memory area (55) of the secure element (100) and
- to make a software image (30b; 60b) operable by the secured specific data (35b; 65b), the software image (30b; 60b) being loaded onto the secure element (100) and representing an update of the installed software (30a; 60a),
wherein the installed software (30a; 60a) is configured to be stored together with the specific data (35a; 65a) in a memory area (55) of the SE (100) and the update agent (10) is configured to copy the specific data (35b; 65b) from the memory area (55) of the SE (100) to the memory (12) of the update agent (10) to secure the specific data (35a; 65a),
wherein the memory (12) of the update agent (10) is a dedicated and secured segment of non-volatile memory to which the update agent (10) has exclusive access to,
wherein securing (3) the specific data (35,a, 65a) is performed only during a factory production phase of the SE (100).

11. The update agent (10) according to claim 10, wherein the update agent (10) is configured to secure specific data (35a; 65a) comprising personalization data, particularly secure credentials and/or cryptographic keys, by which the installed software (30a; 60a) has been personalized, and to update the installed software (30a; 60a) by personalizing the loaded software image (30b; 60b) using the secured personalization data (35b; 65b), whereas, preferably, the specific data (35a; 65a) is secured during a production phase (I) of the SE (100) and the installed software (30a; 60a) is updated in a subsequent phase (II, III, IV) after the production phase (I) of the SE (100).

12. The update agent (10) according to any one of claims 10 to 11, wherein the update agent (10) is configured to conduct a method according to any one of claims 1 to 7 and/or is realized as an executable software product configured to be installed on a security element (100) according to any one of claims 8 to 9 and to be executed by a processor (40) of the security element (100).

13. A computer-program product for use in conjunction with a secure element (100) in an electronic device, the computer-program product comprising a non-transitory computer-readable storage medium and a computer-program mechanism embedded therein, to load a software into the secure element (100) in the electronic device, the computer-program mechanism including:
- instructions for securing specific data (35a; 65a) required for operating a software (30a; 60a) installed on the secure element (100) in a memory area (55), the specific data (35a; 65a) comprising personalization data the installed software (30a; 60a) has been personalized with;
- instructions for receiving a software image (30b; 60b) to be loaded onto the secure element (100), the software image (30b; 60b) representing an update of the installed software (30a; 60a); and
- instructions for making the software image (30b; 60b) operable by the secured specific data (35b; 65b) and/or personalizing the software image (30b; 60b) by the personalization data (35b; 65b) comprised in the specific memory (12),
wherein the installed software (30a; 60a) is stored together with the specific data (35a; 65a) in a memory area (55) of the SE (100) and the specific data (35a; 65a) is secured (53) by copying the specific data (35b; 65b) from the memory area (55) of the SE (100) to the memory (12) of the update agent (10), wherein the memory (12) of the update agent (10) is a dedicated and secured segment of non-volatile memory to which the update agent (10) has exclusive access to,
wherein securing (3) the specific data (35,a, 65a) is performed only during a factory production phase of the SE (100).

## Patentansprüche

1. Verfahren zum Aktualisieren einer installierten Software (60a), insbesondere eines Betriebssystems, OS, (30a) in einem sicheren Element, SE (100), wobei das Verfahren umfasst:
- Bereitstellen (S1) eines Aktualisierungsagenten (10) in dem SE (100);
- Sichern (S3) spezifischer Daten (35a; 65a), die zum Betreiben der installierten Software (30a; 60a) erforderlich sind, in einem Speicher (12) des Aktualisierungsagenten (10);
- Laden (S4a) eines Software-Images (30b; 60b) in das SE (100), wobei das Software-Image (30b; 60b) eine Aktualisierung der installierten Software (30a; 60a) darstellt;
- betriebsfähig machen (S5) des Software-Images (30b; 60b) durch die gesicherten spezifischen Daten (35b; 65b),
wobei die installierte Software (30a; 60a) zusammen mit den spezifischen Daten (35a; 65a) in einem Speicherbereich (55) des SE (100) gespeichert wird und die spezifischen Daten (35a; 65a) durch Kopieren der spezifischen Daten (35b; 65b) von dem Speicherbereich (55) des SE (100) in den Speicher (12) des Aktualisierungsagenten (10) gesichert werden (S3),
wobei der Speicher (12) des Aktualisierungsagenten (10) ein dediziertes und gesichertes Segment eines nichtflüchtigen Speichers ist, auf das der Aktualisierungsagent (10) exklusiven Zugriff hat,
wobei das Sichern (3) der spezifischen Daten (35a, 65a) nur während einer Fertigungsphase des SE (100) durchgeführt wird.

2. Verfahren nach Anspruch 1, wobei in dem Schritt des Sicherns (S3) spezifische Daten (35a; 65a), die Personalisierungsdaten der installierten Software (30a; 60a) umfassen, gesichert werden, insbesondere sichere Authentifizierungsdaten und/oder kryptographische Schlüssel.

3. Verfahren nach Anspruch 2, wobei die installierte Software (30a; 60a) mit den Personalisierungsdaten (35a; 65a) personalisiert wurde und die installierte Software (30a; 60a) aktualisiert wird (S4, S5), indem das Software-Image (30b; 60b) durch Personalisieren des Software-Images (30b; 60b) unter Verwendung der Personalisierungsdaten (35b; 65b) betriebsfähig gemacht wird (S5).

4. Verfahren nach Anspruch 1, wobei die installierte Software (60a; 30a) zusammen mit den spezifischen Daten (35a; 65a) durch Löschen des Speicherbereichs (55) des SE (100) vor dem Laden (S4a) des Software-Images (30b; 60b) oder als ein Ergebnis des Ladens (S4a) des Software-Images (30b; 60b) in den Speicherbereich (55) gelöscht wird (S4).

5. Verfahren nach einem der vorhergehenden Ansprüche, wobei die spezifischen Daten (35a; 65a) während einer Produktionsphase (I) des SE (100) gesichert werden (S3) und das Software-Image (30b; 60b) in einer nachfolgenden Phase (II, III, IV) nach der Produktionsphase (I) des SE (100) geladen (S4a) und betriebsfähig gemacht wird (S5).

6. Verfahren nach einem der vorhergehenden Ansprüche, wobei die spezifischen Daten (35a; 65a) durch den Aktualisierungsagenten (10) gesichert werden (S3), falls und sobald die spezifischen Daten (35a; 65a) während einer Produktionsphase (I) des SE (100) geändert werden, wobei der Aktualisierungsagent (10) das Sichern der spezifischen Daten (35a; 65a) stoppt, falls und sobald das SE (100) zu einer nachfolgenden Phase (II, III, IV) nach der Produktionsphase (I) des SE (100) übergeht.

7. Verfahren nach einem der vorhergehenden Ansprüche, wobei der Aktualisierungsagent (10) durch Laden (S1) des Aktualisierungsagenten (10) in das SE (100) während einer Produktionsphase (I) des SE (100) bereitgestellt wird.

8. Sicheres Element (100), umfassend eine installierte Software (60a), insbesondere ein Betriebssystem (30a) und einen Aktualisierungsagenten, wobei der Aktualisierungsagent (10) einen Speicher (12) umfasst, in dem spezifische Daten (35b; 65b), die zum Betreiben der installierten Software (30a; 60a) erforderlich sind, gesichert sind, und konfiguriert ist, um ein Software-Image (30b; 60b) durch die gesicherten spezifischen Daten (65b; 35b) betreibbar zu machen, wobei das Software-Image (30b; 60b) auf das sichere Element (100) geladen wird und eine Aktualisierung der installierten Software (30a; 60a) darstellt,
wobei die spezifischen Daten (35b; 65b), die in dem Speicher (12) des Aktualisierungsagenten (10) gesichert sind, eine Kopie spezifischer Daten (35a; 65a) sind, die in einem Speicherbereich (55) des sicheren Elements (100) zusammen mit der installierten Software (30a; 60a) gespeichert sind,
wobei der Speicher (12) des Aktualisierungsagenten (10) ein dediziertes und gesichertes Segment eines nichtflüchtigen Speichers ist, auf das der Aktualisierungsagent (10) exklusiven Zugriff hat,
wobei das Sichern (3) der spezifischen Daten (35a, 65a) nur während einer Fertigungsphase des SE (100) durchgeführt wird.

9. Sicheres Element (100) nach Anspruch 8, wobei die gesicherten spezifischen Daten (35b; 65b) Personalisierungsdaten der installierten Software (30a; 60a) umfassen, insbesondere sichere Authentifizierungsdaten und/oder kryptographische Schlüssel, und die installierte Software (30a; 60a) mit den Personalisierungsdaten (35a; 65a) personalisiert wurde, wohingegen der Aktualisierungsagent (10) konfiguriert ist, um die installierte Software (30a; 60a) zu aktualisieren, indem das geladene Software-Image (30b; 60b) durch Personalisieren unter Verwendung der gesicherten Personalisierungsdaten (35b; 65b) betriebsfähig gemacht wird.

10. Aktualisierungsagent (10) zur Verwendung in einem sicheren Element (100), wobei der Aktualisierungsagent (10) einen Speicher (12) umfasst und konfiguriert ist,
- um spezifische Daten (35a; 65a), die zum Betreiben einer auf dem sicheren Element (100) installierten Software (30a; 60a) erforderlich sind, in einem Speicherbereich (55) des sicheren Elements (100) zu sichern und
- um ein Software-Image (30b; 60b) durch die gesicherten spezifischen Daten (35b; 65b) betreibbar zu machen, wobei das Software-Image (30b; 60b) auf das sichere Element (100) geladen wird und eine Aktualisierung der installierten Software (30a; 60a) darstellt,
wobei die installierte Software (30a; 60a) konfiguriert ist, um zusammen mit den spezifischen Daten (35a; 65a) in einem Speicherbereich (55) des SE (100) gespeichert zu werden, und der Aktualisierungsagent (10) konfiguriert ist, um die spezifischen Daten (35b; 65b) von dem Speicherbereich (55) des SE (100) in den Speicher (12) des Aktualisierungsagenten (10) zu kopieren, um die spezifischen Daten (35a; 65a) zu sichern,
wobei der Speicher (12) des Aktualisierungsagenten (10) ein dediziertes und gesichertes Segment eines nichtflüchtigen Speichers ist, auf das der Aktualisierungsagent (10) exklusiven Zugriff hat,
wobei das Sichern (3) der spezifischen Daten (35a, 65a) nur während einer Fertigungsphase des SE (100) durchgeführt wird.

11. Aktualisierungsagent (10) nach Anspruch 10, wobei der Aktualisierungsagent (10) konfiguriert ist, um spezifische Daten (35a; 65a) zu sichern, die Personalisierungsdaten umfassen, insbesondere sichere Authentifizierungsdaten und/oder kryptographische Schlüssel, durch die die installierte Software (30a; 60a) personalisiert wurde, und um die installierte Software (30a; 60a) durch Personalisieren des geladenen Software-Images (30b; 60b) unter Verwendung der gesicherten Personalisierungsdaten (35b; 65b) zu aktualisieren, wohingegen vorzugsweise die spezifischen Daten (35a; 65a) während einer Produktionsphase (I) des SE (100) gesichert werden und die installierte Software (30a; 60a) in einer nachfolgenden Phase (II, III, IV) nach der Produktionsphase (I) des SE (100) aktualisiert wird.

12. Aktualisierungsagent (10) nach einem der Ansprüche 10 bis 11, wobei der Aktualisierungsagent (10) konfiguriert ist, um ein Verfahren nach einem der Ansprüche 1 bis 7 durchzuführen, und/oder als ein ausführbares Softwareprodukt realisiert ist, das konfiguriert ist, um auf einem sicheren Element (100) nach einem der Ansprüche 8 bis 9 installiert zu werden und durch einen Prozessor (40) des sicheren Elements (100) ausgeführt zu werden.

13. Computerprogrammprodukt zur Verwendung in Verbindung mit einem sicheren Element (100) in einer elektronischen Vorrichtung, wobei das Computerprogrammprodukt ein nichtflüchtiges computerlesbares Speichermedium und einen darin eingebetteten Computerprogrammmechanismus umfasst, um eine Software in das sichere Element (100) in der elektronischen Vorrichtung zu laden, wobei der Computerprogrammmechanismus umfasst:
- Anweisungen zum Sichern spezifischer Daten (35a; 65a), die zum Betreiben einer auf dem sicheren Element (100) installierten Software (30a; 60a) erforderlich sind, in einem Speicherbereich (55), wobei die spezifischen Daten (35a; 65a) Personalisierungsdaten umfassen, mit denen die installierte Software (30a; 60a) personalisiert wurde;
- Anweisungen zum Empfangen eines Software-Images (30b; 60b), das auf das sichere Element (100) geladen werden soll, wobei das Software-Image (30b; 60b) eine Aktualisierung der installierten Software (30a; 60a) darstellt; und
- Anweisungen zum betriebsfähig Machen des Software-Images (30b; 60b) durch die gesicherten spezifischen Daten (35b; 65b) und/oder zum Personalisieren des Software-Images (30b; 60b) durch die Personalisierungsdaten (35b; 65b), die in dem spezifischen Speicher (12) enthalten sind,
wobei die installierte Software (30a; 60a) zusammen mit den spezifischen Daten (35a; 65a) in einem Speicherbereich (55) des SE (100) gespeichert wird und die spezifischen Daten (35a; 65a) durch Kopieren der spezifischen Daten (35b; 65b) von dem Speicherbereich (55) des SE (100) in den Speicher (12) des Aktualisierungsagenten (10) gesichert werden (53),
wobei der Speicher (12) des Aktualisierungsagenten (10) ein dediziertes und gesichertes Segment eines nichtflüchtigen Speichers ist, auf das der Aktualisierungsagent (10) exklusiven Zugriff hat,
wobei das Sichern (3) der spezifischen Daten (35a, 65a) nur während einer Fertigungsphase des SE (100) durchgeführt wird.

## Revendications

1. Procédé de mise à jour d'un logiciel installé (60a), en particulier d'un système d'exploitation, OS, (30a) dans un élément sécurisé, SE (100), le procédé comprenant:
- la fourniture (S1) d'un agent de mise à jour (10) dans le SE (100);
- la sécurisation (S3) de données spécifiques (35a; 65a) requises pour faire fonctionner le logiciel installé (30a; 60a) dans une mémoire (12) de l'agent de mise à jour (10);
- le chargement (S4a) d'une image de logiciel (30b; 60b) dans le SE (100), l'image de logiciel (30b; 60b) représentant une mise à jour du logiciel installé (30a; 60a);
- la réalisation (S5) de l'image de logiciel (30b; 60b) utilisable par les données spécifiques sécurisées (35b; 65b),
dans lequel le logiciel installé (30a; 60a) est stocké conjointement avec les données spécifiques (35a; 65a) dans une zone de mémoire (55) du SE (100) et les données spécifiques (35a; 65a) sont sécurisées (S3) en copiant les données spécifiques (35b; 65b) de la zone de mémoire (55) du SE (100) à la mémoire (12) de l'agent de mise à jour (10),
dans lequel la mémoire (12) de l'agent de mise à jour (10) est un segment dédié et sécurisé de mémoire non volatile auquel l'agent de mise à jour (10) a un accès exclusif,
dans lequel la sécurisation (S3) des données spécifiques (35a, 65a) est effectuée uniquement pendant une phase de production d'usine du SE (100).

2. Procédé selon la revendication 1, dans lequel, dans l'étape de sécurisation (S3), des données spécifiques (35a; 65a) qui comprennent des données de personnalisation du logiciel installé (30a; 60a) sont sécurisées, en particulier des justificatifs d'identité sécurisés et/ou des clés cryptographiques.

3. Procédé selon la revendication 2, dans lequel le logiciel installé (30a; 60a) a été personnalisé avec les données de personnalisation (35a; 65a) et le logiciel installé (30a; 60a) est mis à jour (S4, S5) en ce que l'image de logiciel (30b; 60b) est rendue utilisable (S5) en personnalisant l'image de logiciel (30b; 60b) en utilisant les données de personnalisation (35b; 65b).

4. Procédé selon la revendication 1, dans lequel le logiciel installé (60a; 30a) est supprimé (S4) conjointement avec les données spécifiques (35a; 65a) en supprimant la zone de mémoire (55) du SE (100) avant le chargement (S4a) de l'image de logiciel (30b; 60b) ou à la suite du chargement (S4a) de l'image de logiciel (30b; 60b) dans la zone de mémoire (55).

5. Procédé selon l'une quelconque des revendications précédentes, dans lequel les données spécifiques (35a; 65a) sont sécurisées (S3) pendant une phase de production (I) du SE (100) et l'image de logiciel (30b; 60b) est chargée (S4a) et rendue utilisable (S5) dans une phase suivante (II, III, IV) après la phase de production (I) du SE (100).

6. Procédé selon l'une quelconque des revendications précédentes, dans lequel les données spécifiques (35a; 65a) sont sécurisées (S3) par l'agent de mise à jour (10) si et lorsque les données spécifiques (35a; 65a) sont modifiées pendant une phase de production (I) du SE (100), dans lequel l'agent de mise à jour (10) arrête la sécurisation des données spécifiques (35a; 65a) si et lorsque le SE (100) passe à une phase suivante (II, III, IV) après la phase de production (I) du SE (100).

7. Procédé selon l'une quelconque des revendications précédentes, dans lequel
l'agent de mise à jour (10) est fourni en chargeant (S1) l'agent de mise à jour (10) dans le SE (100) pendant une phase de production (I) du SE (100).

8. Élément sécurisé (100), comprenant un logiciel installé (60a), en particulier un système d'exploitation (30a) et un agent de mise à jour, l'agent de mise à jour (10) comprenant une mémoire (12) dans laquelle des données spécifiques (35b; 65b) requises pour faire fonctionner le logiciel installé (30a; 60a) sont sécurisées et étant configuré pour rendre une image de logiciel (30b; 60b) utilisable par les données spécifiques sécurisées (65b; 35b), l'image de logiciel (30b; 60b) étant chargée sur l'élément sécurisé (100) et représentant une mise à jour du logiciel installé (30a; 60a),
dans lequel les données spécifiques (35b; 65b) sécurisées dans la mémoire (12) de l'agent de mise à jour (10) sont une copie de données spécifiques (35a; 65a) stockées dans une zone de mémoire (55) de l'élément sécurisé (100) conjointement avec le logiciel installé (30a; 60a),
dans lequel la mémoire (12) de l'agent de mise à jour (10) est un segment dédié et sécurisé de mémoire non volatile auquel l'agent de mise à jour (10) a un accès exclusif,
dans lequel la sécurisation (S3) des données spécifiques (35a, 65a) est effectuée uniquement pendant une phase de production d'usine du SE (100).

9. Élément sécurisé (100) selon la revendication 8, dans lequel les données spécifiques sécurisées (35b; 65b) comprennent des données de personnalisation du logiciel installé (30a; 60a), en particulier des justificatifs d'identité sécurisés et/ou des clés cryptographiques, et le logiciel installé (30a; 60a) a été personnalisé avec les données de personnalisation (35a; 65a), tandis que l'agent de mise à jour (10) est configuré pour mettre à jour le logiciel installé (30a; 60a) en ce que l'image de logiciel chargée (30b; 60b) est rendue utilisable en la personnalisant en utilisant les données de personnalisation sécurisées (35b; 65b).

10. Agent de mise à jour (10) destiné à être utilisé dans un élément sécurisé (100), l'agent de mise à jour (10) comprenant une mémoire (12) et étant configuré
- pour sécuriser des données spécifiques (35a; 65a) requises pour faire fonctionner un logiciel (30a; 60a) installé sur l'élément sécurisé (100) dans une zone de mémoire (55) de l'élément sécurisé (100) et
- pour rendre une image de logiciel (30b; 60b) utilisable par les données spécifiques sécurisées (35b; 65b), l'image de logiciel (30b; 60b) étant chargée sur l'élément sécurisé (100) et représentant une mise à jour du logiciel installé (30a; 60a),
dans lequel le logiciel installé (30a; 60a) est configuré pour être stocké conjointement avec les données spécifiques (35a; 65a) dans une zone de mémoire (55) du SE (100) et l'agent de mise à jour (10) est configuré pour copier les données spécifiques (35b; 65b) de la zone de mémoire (55) du SE (100) à la mémoire (12) de l'agent de mise à jour (10) pour sécuriser les données spécifiques (35a; 65a),
dans lequel la mémoire (12) de l'agent de mise à jour (10) est un segment dédié et sécurisé de mémoire non volatile auquel l'agent de mise à jour (10) a un accès exclusif,
dans lequel la sécurisation (S3) des données spécifiques (35a, 65a) est effectuée uniquement pendant une phase de production d'usine du SE (100).

11. Agent de mise à jour (10) selon la revendication 10, dans lequel l'agent de mise à jour (10) est configuré pour sécuriser des données spécifiques (35a; 65a) comprenant des données de personnalisation, en particulier des justificatifs d'identité sécurisés et/ou des clés cryptographiques, par lesquelles le logiciel installé (30a; 60a) a été personnalisé, et pour mettre à jour le logiciel installé (30a; 60a) en personnalisant l'image de logiciel chargée (30b; 60b) en utilisant les données de personnalisation sécurisées (35b; 65b), tandis que, de préférence, les données spécifiques (35a; 65a) sont sécurisées pendant une phase de production (I) du SE (100) et le logiciel installé (30a; 60a) est mis à jour dans une phase suivante (II, III, IV) après la phase de production (I) du SE (100).

12. Agent de mise à jour (10) selon l'une quelconque des revendications 10 à 11, dans lequel l'agent de mise à jour (10) est configuré pour effectuer un procédé selon l'une quelconque des revendications 1 à 7 et/ou est réalisé sous la forme d'un produit logiciel exécutable configuré pour être installé sur un élément sécurisé (100) selon l'une quelconque des revendications 8 à 9 et pour être exécuté par un processeur (40) de l'élément sécurisé (100).

13. Produit de programme informatique destiné à être utilisé conjointement avec un élément sécurisé (100) dans un dispositif électronique, le produit de programme informatique comprenant un support de stockage non transitoire lisible par ordinateur et un mécanisme de programme informatique intégré dans celui-ci, pour charger un logiciel dans l'élément sécurisé (100) dans le dispositif électronique, le mécanisme de programme informatique comprenant:
- des instructions pour sécuriser des données spécifiques (35a; 65a) requises pour faire fonctionner un logiciel (30a; 60a) installé sur l'élément sécurisé (100) dans une zone de mémoire (55), les données spécifiques (35a; 65a) comprenant des données de personnalisation avec lesquelles le logiciel installé (30a; 60a) a été personnalisé;
- des instructions pour recevoir une image de logiciel (30b; 60b) à charger sur l'élément sécurisé (100), l'image de logiciel (30b; 60b) représentant une mise à jour du logiciel installé (30a; 60a); et
- des instructions pour rendre l'image de logiciel (30b; 60b) utilisable par les données spécifiques sécurisées (35b; 65b) et/ou personnaliser l'image de logiciel (30b; 60b) par les données de personnalisation (35b; 65b) comprises dans la mémoire spécifique (12),
dans lequel le logiciel installé (30a; 60a) est stocké conjointement avec les données spécifiques (35a; 65a) dans une zone de mémoire (55) du SE (100) et les données spécifiques (35a; 65a) sont sécurisées (53) en copiant les données spécifiques (35b; 65b) de la zone de mémoire (55) du SE (100) à la mémoire (12) de l'agent de mise à jour (10),
dans lequel la mémoire (12) de l'agent de mise à jour (10) est un segment dédié et sécurisé de mémoire non volatile auquel l'agent de mise à jour (10) a un accès exclusif,
dans lequel la sécurisation (S3) des données spécifiques (35a, 65a) est effectuée uniquement pendant une phase de production d'usine du SE (100).
